Europäisches Patentamt

**European Patent Office**

**Office européen des brevets**

(11) Publication number: **0 249 130**
**A2**

# EUROPEAN PATENT APPLICATION

(21) Application number: **87107976.0**

(51) Int. Cl.⁴: **C04B 35/56**

(22) Date of filing: **02.06.87**

(30) Priority: **09.06.86 US 871956**

(43) Date of publication of application:
**16.12.87 Bulletin 87/51**

(84) Designated Contracting States:
**DE ES FR GB**

(71) Applicant: **NORTON COMPANY**
**1 New Bond Street**
**Worcester Massachusetts 01606(US)**

(72) Inventor: **Washburn, Malcolm E.**
**Mirick Road**
**Princeton Massachusetts(US)**

(74) Representative: **Baillie, Iain Cameron et al**
**c/o Ladas & Parry Isartorplatz 5**
**D-8000 München 2(DE)**

(54) **Refractory comprising nitride-bonded silicon carbide.**

(57) An improved silicon nitride-bonded silicon carbide refractory consisting essentially of silicon carbide grains and a silicon nitride bond therefor characterized by the fact that said silicon carbide grains have a coating of zirconium oxide thereon. The product is produced by coating the silicon carbide grains and partially impregnating the grains with zirconium oxide or a compound that will be converted to zirconium oxide during the firing of the green refractory shape.

EP 0 249 130 A2

This invention relates to the general field of refractories and particularly to those with a primary component of silicon carbide bonded by silicon nitride formed by reactive nitriding as well known in the art.

The following U.S. Patents are representative of the most relevant prior art: 1,159,264; 2,465,672; 2,609,318; 2,636,826; 2,752,258; 3,960,577; 3,968,194; 4,184,882; 4,187,116; 4,377,542; 4,388,085; 4,431,431; and 4,467,043.

The general process of bonding silicon carbide particles by reactive nitriding is described in U.S. Patent 2,752,258. Relatively coarse silicon carbide granules are mixed with much finer silicon and optionally also silicon carbide powder, along with minor amounts of clays or other binding aids, then pressed to give a green body. The latter is converted to a finished refractory by exposure to heat and to nitrogen or a nitrogen-bearing gas such as ammonia under non-oxidizing conditions, normally for at least several hours. By reaction with the nitrogen content of the gas, the fine silicon and some of the fine silicon carbide if any is present are converted into silicon nitride. These basic materials and processes continue in commercial use today and are used in the present invention.

Because silicon nitride has a lower coefficient of thermal expansion than silicon carbide, as nitride bonded refractories cool from the process of manufacturing them, stresses or even porosity can develop as the silicon carbide shrinks more than the silicon nitride with which it is bonded. For the same reason, refractories of this type were widely observed in the early art to be sensitive to thermal shock. One method of ameliorating the thermal sensitivity is described in U.S. Patent 2,609,318: adding other metals, particularly iron, to the fine silicon powder used for reaction bonding. It was observed that such additions, specifically in the form of ferrosilicon or ferromanganese silicon, led to refractory articles with substantially less thermal sensitivity. A disadvantage was that the added metal oxides also sometimes led to formation of a glaze, capable of staining materal in contact with it, on the surface of the refractory. Another teaching of the above patent was avoidance of this staining problem by forming a refractory article with an exterior portion free from added glaze-forming metals around a core which did contain such metal.

Another expedient for reducing thermal sensitivity is taught in U.S. Patent 2,636,826, which is probably most closely related to the instant invention. This patent teaches the use of zirconia, zirconium or a zirconium compound, preferably from 3-7% by weight of zirconia, as part of the bond for nitride bonded silicon carbide refractories. It also teaches that commercial grade silicon powder, which contained about two percent total by weight of oxides of other metals, notably iron, was preferable to purer silicon powder because nitriding was accomplished faster with the less pure silicon powder. Nicholson further taught that the preferable form of zirconium addition was zirconia stabilized by calcium oxide and the preferable method of mixing the zirconia with the other ingredients was by dry tumbling, followed by wet kneading after addition of bentonite gel, which "serves to take up the zirconium oxide and the finely divided silicon powder...and distribute them evenly and uniformly throughout the molding mixture." (Nicholson column 4 lines 48-53.) Nicholson, although describing the products of his invention as suitable for a wide variety of uses, taught nothing explicit about the modulus of rupture or any other quantitative measure of mechanical strength of the products of his invention.

U.S. Patent 2,465,672 taught that zirconium silicate, formed by adding zirconia to silicon carbide powder covered with its natural surface coating of silica, could form a satisfactory bond for a polycrystalline silicon carbide refractory. No nitriding was involved in this teaching, however. A related earlier teaching was in U.S. Patent 1,159,264 teaching that approximately equal amounts of zirconia and silicon carbide could be mixed together and fired to produce a refractory material. Again, no nitriding was involved.

Another distinct but related type of refractory is exemplified by U.S. Patents 3,960,577 and 3,968,194. These patents describe refractories made by combining about 90% silicon carbide and about 10% silicon nitride powders, together with a boron compound as a densifying aid, and hot pressing the mixture to form a densified ceramic directly. No reactive nitriding is taught, and the primary object of the invention appears to be provision of refractories which have sufficient electrical conductivity to be amenable to electrochemical machining and electrical discharge machining. Still more remote prior art is represented by U.S. Patents 4,184,882 and 4,187,116 which these teach hot pressed composites of silicon carbide, silicon nitride, and other materials, but the composites contain no more than 40% by volume of silicon carbide.

U.S. Patent 4,467,043 represents the opposite extreme in composition; it teaches refractories composed of at least 98.8% by weight of silicon carbide bonded with an aluminum containing additive rather than with silicon nitride as in the instant invention.

A variety of densifying aids for silicon nitride taught in U.S. Patents 4,377,542; 4,388,085 and 4,431,431. In all of these patents, refractories with silicon nitride as the primary constituent are taught; silicon carbide plays no significant role if any. Zirconia is among the many densifying aids taught (by '431).

Relatively little attention is apparent in the prior art to the modulus of rupture (MOR) of refractories, even though this is a critical property with respect to the use of refractories as kiln batts or plates. Such batts or plates are relatively thin sheets used to support other materials while firing. It is economically advantageous for the batts or plates to be as thin as possible, so that as little as possible of the expensive space within the high temperature region of the kiln will be occupied by batts, freeing more of the kiln space for production use. Currently, length to thickness ratios of more than about 50 for batts or plates made by nitride bonding silicon carbide are impractical, because of the danger of breakage when such batts are loaded with typical kiln firing loads. This corresponds to a maximum MOR of about 7,000 pounds per square inch (psi). An MOR of about 8,000 psi at all temperatures between room temperature and at least 1450°C. would significantly improve the loading factors available for kiln batts.

In principle, the increased MOR of batts could be achieved by higher pressure pressing of the green batt before firing, but in practice such pressing is difficult for large batts because of the great size and weight of the mold bands required, and the resulting higher density makes full nitridation very difficult.

## DISCLOSURE OF THE INVENTION

The invention is a new high strength refractory composition that is basically silicon nitride bonded silicon carbide grains wherein the silicon carbide grains are coated with zirconium oxide with at least some of the zirconium oxide penetrating into the silicon carbide grains. The product exhibits moduli of rupture in excess of 7,000 psi (54.13 MPa) at 22°C., 1250°C. and 1450°C. and a ratio of modulus of rupture (MOR) to modulus of elasticity (MOE) of at least $4 \times 10^{-4}$ at room temperature, and generally from $4 \times 10^{-4}$ to $6 \times 10^{-4}$ at that temperature.

As with prior art silicon nitride bonded silicon carbide, the composition of the invention can be formed using coarse silicon carbide grain, 8 to 325 mesh (U.S. Standard Sieve Series) which is blended with a bonding mixture made up of fine silicon metal powder and/or fine reactive silicon carbide powder; the fine silicon powder is 200 mesh and finer and the silicon carbide powder is generally 400 mesh and finer (U.S. Standard Sieve Series). The final powdered bonding mixture includes a small amount of finely ground clay in an amount of from 0.5 to 4% by weight of the total composition. It is also desirable to add a minor amount of an iron oxide to the bonding mixture, particularly if the bonding mixture contains a substantial amount of fine, reactive silicon carbide. The coarse silicon carbide grain should be present in an amount of from 40 to 80% by weight with the remainder being bonding mix which in turn should be made up of 0 to 30% of reactive silicon carbide, 12 to 40% of silicon metal 0.5 to 4% of clay as pointed out above, and 0.5 to 4% iron oxide, based on the total batch. The final fired product will include 1 to 8% of a glassy phase of which 0.5 to 4% will be the iron oxide.

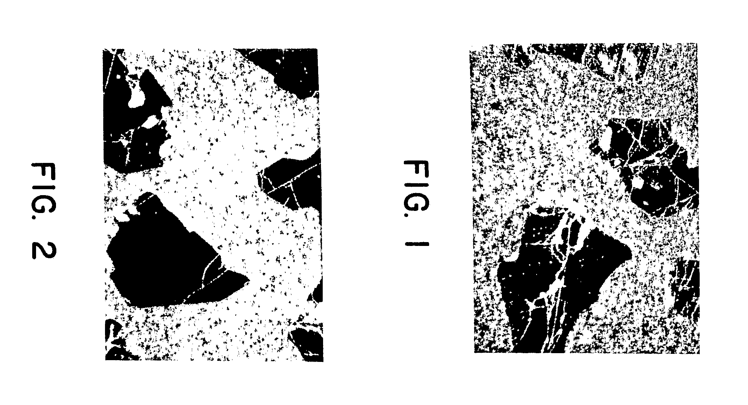

The invention departs from and distinguishes over the prior art by the addition to the coarse silicon carbide grain of from 0.5 to 2% of a zirconium oxide coating added to said grain preferably in the form of a solution of a zirconium compound which, upon subsequent nitriding and firing, converts to the zirconium oxide. A solution is preferably in order to facilitate partial penetration of the silicon carbide grain by the zirconium compound which is to become zirconium oxide when the formed product is nitrided and fired. An ideal zirconium compound is zirconium orthosulfate. It is believed that a major contributor to the improvement in modulus of rupture of the invention is the fact that the dissolved zirconium compound actually partially penetrates the coarse silicon carbide grain and when converted to zirconium oxide, causes substantial fracturing of the grain. This may be seen quite clearly in Figures 1 and 2 of the drawing. Figure 1 is a 50 x SEM photomicrograph of typical silicon carbide grains which had been treated with a zirconium orthosulfate solution prior to being bonded with silicon nitride to form a test bar; Figure 2 are similar typical silicon carbide grains which had not been treated with zirconium orthosulfate prior to bonding into a test bar. The grains of silicon carbide shown in Figure 1 exhibit numerous fissures or cracks. The untreated grains in Figure 2 show very few cracks.

While it is totally unexpected that causing microfractures in one component of a composite would make that composite stronger, that is exactly what happens in the product of the invention, i.e. the modulus of rupture is substantially increased as a result of the earlier coating of the grain with zirconium orthosulfate. There is however, a drop in modulus of elasticity of test specimens made according to the invention which is consistent with the fracturing observed in the individual silicon carbide grains. It is theorized that the apparent illogical increased in strength of the invention product as compared to the prior art is the result of, at least in part, of micro-fracturing of the silicon carbide grain which gives the composite product lower modulus of elasticity while maintaining integrity of the adhesion of the grains to the bond matrix to give the observed higher strengths, coupled with the change in volume of the formed zirconium oxide on the surface of the grains as it goes from e.g. the orthosulfate to the oxide thus filling in the normal gap which occurs between the nitride matrix bond and the silicon carbide grains which occurs as a result of the different thermal expansion properties of the two materials.

The present nitride bonded refractory material has numerous end uses such as in crucibles, combustion boats, mortars and laboratory ware of all kinds, as well as turbine blades, rocket nozzles, ventures and the like, particularly where oxidation is a real problem. The present invention is particularly valuable in products that, for one reason or another, need to be thin. Typical products of the latter are kiln batts or plates used to carry green refractory ware during firing, as described briefly above.

The product of the present invention can be fabricated by any of the known methods for forming silicon nitride bonded silicon carbide, with the added step of coating the silicon carbide grain with a zirconium oxide generating compound. The coated grain may be mixed with a bond made up of finely divided silicon metal, a small amount of clay and minor amount of an organic temporary binder to give the shape green strength. The mixture is placed in a mold of appropriate configuration and pressed at room temperature. The green shape is then removed from the mold and fired at for example 1200°C. in a nitrogen atmosphere to convert the silicon metal to silicon nitride; usually some amount of silicon oxynitride is also present. A variant of the foregoing is the utilization of fine, reactive silicon carbide alone or in combination with powdered silicon metal, and a small amount of iron oxide along with the clay and organic binder.

All percentages recited herein are based on the total mix or the total fired product.

## EXAMPLE I

A mix having the weight percent composition of Example I shown in Table I was prepared in the conventional manner adding sufficient water to produce a final mix with satisfactory hydraulic pressing properties. The 10F silicon carbide grain had a particle size distribution of 1-6% on an 8 mesh screen (all mesh sizes based on U.S. Standard Sieve Series unless indicated otherwise), 4-14% on a 12 mesh screen, 25-35% on a 25 mesh screen, 31-41% on a 100 mesh screen, 7-18% on a 325 mesh screen, and 9-17% through a 325 mesh screen. The -200 mesh elemental silicon was technical grade containing 98.5% silicon. The specific clay utilized was bentonite and was incorporated into the mix as a fine powder. Goulac, calcium lignosulfonate, was used as a temporary binder.

Twelve 9" x 2.25" x 0.75" test bars were pressed at 3.5 tons per square inch, dried, and fired in a nitrogen kiln at a temperature of 1400°C. with a soak at that temperature of 10 hours.

The properties of the test bars were measured and are shown in Table I. The modulus of elasticity (MOE) was measured as Young's Modulus. The modulus of rupture (MOR) was measured at room temperature, 1250°C. and 1450°C.; the MOR tests were carried out using three point loading at about 0.05 inches per minute on an 8" span.

## EXAMPLE II

This example is the same as Example I except that the silicon carbide grain was screened to remove the 8 mesh grains leaving 0-1% retained on an 8 mesh screen and 4-10% on a 12 mesh screen. Kaolin was the clay used and 1% $Fe_2O_3$ was included in the mix. The properties and composition are listed in Table I.

Examples I and II are prior art silicon nitride bonded silicon carbide refractories.

## EXAMPLE III

The resulting product here was similar to that of Example II except that the silicon carbide grain was first coated with an aqueous solution of zirconium orthosulfate so as to deposit 3.2% by weight of that zirconium compound. The composition and properties are shown in Table I.

The mix preparation, molding and firing were carried out in the same manner as in Examples I and II which is also true of subsequent Examples IV through IX.

The zirconium orthosulfate solution was made by adding 140 grams of water to 64 grams of the salt which was then added to 1300 grams of silicon carbide grains in a paddle mixer. Preblended bond, in an amount of 700 grams, was added to the so treated grain. The mix was then processed into 9" x 2.25" x 0.75" bars in the manner described in Example I. The compositional details and properties of these bars appear in Table I.

## EXAMPLE IV

This is the same as Example III except that 5% of the silicon carbide grain was replaced by reactive silicon carbide i.e. silicon carbide with a particle size distribution of 10 microns and finer with an average of about 2 microns. The properties of the resulting bars are in Table I below.

## EXAMPLES V, VI, VII

These examples are basically the same as Example IV except that the compositions were modified to each contain 10% reactive silicon carbide and 2, 3, and 4% respectively of zirconium orthosulfate. The compositions and properties are contained in Table I.

## EXAMPLES VIII and IX

These examples show the optimum quantitative range of fine silicon metal powder and reactive silicon carbide. The mixes and test bars were fabricated in the same manner as the previous examples. The composition and properties are shown in Table I.

## TABLE I

| Example | I | II | III | IV | V | VI | VII | VIII | IX |
|---|---|---|---|---|---|---|---|---|---|
| 10F SiC grain | 86.0 | 70.0 | 65.0 | 65.0 | 65.0 | 53.0 | 53.5 | 53.3 | 53.3 |
| -200 Si | 12.0 | 27.0 | 32.0 | 27.0 | 20.0 | 30.0 | 30.0 | 25.0 | 30.0 |
| Reactive SiC | 0 | 0 | 0 | 5.0 | 10.0 | 10.0 | 10.0 | 15.0 | 10.0 |
| Clay | 2.0 | 2.0 | 2.0 | 2.0 | 2.0 | 2.0 | 2.0 | 2.0 | 2.0 |
| $Fe_2O_3$ | 0 | 1.0 | 1.0 | 1.0 | 0.5 | 2.0 | .5 | 1.5 | 1.5 |
| ZPS* | 0 | 0 | 3.2 | 3.2 | 2.0 | 3.0 | 4.0 | 3.2 | 3.2 |
| Goulac | 1.0 | 1.0 | 1.0 | 1.0 | 1.0 | 1.0 | 1.0 | 1.5 | 1.5 |
| Fired Density g/cc | 2.60 | 2.54 | 2.62 | 2.65 | 2.56 | 2.58 | 2.59 | 2.61 | 2.64 |
| $MOE(X10^6)PSI$ | 21.0 | 18.2 | 19.1 | 22.4 | 17.1 | 16.7 | 17.9 | 14.4 | 21.0 |
| MOR, RT | 5620 | 5932 | 8080 | 9262 | 6604 | 7317 | 6663 | 9306 | 8508 |
| MOR, 1250°C. | 7990 | 8183 | 10712 | 11480 | 9023 | 8814 | 9922 | 6775 | 8317 |
| MOR, 1450°C. | 4840 | 7171 | 8576 | 10134 | - | - | - | 9727 | 8892 |
| $MOR:MOE(x10^{-4})$ | 2.9 | 3.2 | 4.2 | 4.1 | 3.9 | 4.4 | 3.7 | 4.8 | 4.0 |

*Zirconium orthosulfate

0 249 130

The foregoing examples show the major improvements which result from the addition of a zirconium oxide producing compound to the silicon carbide grain. The improvement in strength, as compared to the prior art, is self evident from the strength data in Table I.

## Claims

1. A refractory composition consisting essentially of silicon carbide grains and a silicon nitride bond therefor characterized by the fact that said silicon carbide grains have a coating of zirconium oxide thereon.

2. A refractory composition according to claim 1, characterized by the fact that some of said zirconium oxide has penetrated into the silicon carbide grains.

3. A refractory composition according to claim 1 or 2, characterized by the fact that said silicon nitride bond includes 1 to 8% by weight of a glassy phase of which 0.5 to 4% is an iron oxide.

4. A refractory composition according to any one of the preceding claims, having a ratio of modulus of rupture to modulus of elasticity of at least $4 \times 10^{-4}$ at room temperature.

5. A refractory composition according to claim 4, having a ratio of modulus of rupture to modulus of elasticity of from $4 \times 10^{-4}$ to $6 \times 10^{-4}$ at room temperature.

6. A refractory composition according to any one of the preceding claims, characterized by the fact that said zirconium oxide is present in an amount of from 0.5 to 2% by weight.

7. A refractory plate having a length to thickness ratio of at least 50, consisting essentially of silicon carbide grains and a silicon nitride bond therefor characterized by the fact that said silicon carbide grains have a coating of zirconium oxide thereon.

8. A plate according to claim 7, characterized by the fact that it is produced from the refractory composition according to any one of claims 1-6.

9. A bonded silicon carbide product characterized by having substantially all of the grains greater than .1 mm in diameter cracked in situ to produce a bonded product with a ratio of modulus of rupture to modulus of elasticity of at least $4 \times 10^{-4}$ and a modulus of rupture greater than 7,000 psi.

10. A process for preparing a refractory composition according to any one of claims 1-6, characterized by adding zirconium compound, for example, zirconium orthosulfate, which converts to zirconium oxide on firing, to silicon carbide grains, nitriding the thus coated grains and then firing said grains.

11. A process according to claim 10, characterized by the fact that the zirconium compound is added in a solution so as partially to penetrate said silicon carbide grains.

FIG. 1

FIG. 2